# EUROPEAN PATENT APPLICATION

(11) **EP 0 673 664 A2**
(43) Date of publication of application: **27.09.1995**
(21) Application number: 95301736.5
(22) Date of filing: 15.03.1995
(51) Int. Cl.: B01D 27/00, B01D 29/00, B01D 24/00, B01D 35/00, B01D 46/00

(54) **Polymer/metallic connections**

(30) Priority: 23.03.1994 GB 9405796
(71) Applicant: Pall Corporation, East Hills, New York 11548 (US)
(72) Inventor: Elton, Darren George, Fareham, Hampshire PO15 6JS (GB); Fox, John Adrian David, Emsworth, Hampshire PO10 7HU (GB); Page, Roger Edward, Hayling Island, Hampshire PO11 0BB (GB); Madgwick, Simon Victor, Titchfield, Hampshire PO14 4HZ (GB); Quinlan, Kevin Michael, Idsworth, Hampshire PO8 0AW (GB)
(74) Representative: Knott, Stephen Gilbert

(57) **Abstract**

A polymeric connector (10) for a filter having a central opening (11) defining a flowpath is connected to a metallic mounting (12) for the filter having an opening which, when the connector and mounting are connected, is in register with the connector opening, the metallic mounting including a connecting portion extending around said mounting opening, by heating the connecting portion such that, on the connecting portion contacting the polymeric connector, the polymeric connector is so heated as to permit the connecting portion to be inserted into the polymeric connector, and inserting the connecting portion into the polymeric connector to form a fluid-tight join therebetween.

## Description

The invention relates to polymer/metallic connections and in particular to the connection of a polymeric connector for a filter and a metallic mounting for a filter.

Various methods have been proposed for connecting a polymeric member to a metallic member including gluing, welding and interlocking. In general, they have not proved satisfactory to resist loads tending to separate the members.

An example of such a connection occurs in the fitting of a filter to a metallic tube sheet. A generally tubular filter carries an end cap of a polymeric material including a central opening providing a flowpath from the interior of the tubular filter. It can be a requirement to mount such a filter on a metallic tube sheet having an opening which registers with the opening in the end cap to continue the flowpath from the interior of the filter. It has previously been proposed to provide the end cap with a depending annular polymeric adapter provided with one or more annular O-rings on its exterior surface and one or more lugs protruding radially from the exterior surface at a point between the O-rings and the join between the adapter and the end cap. The adapter is inserted into a corresponding generally annular socket on the tube sheet with the O-rings providing a fluid-tight seal between the adapter and the socket. The lugs of the adapter enter recesses in the wall of the socket in such a manner as to provide a securing mechanism in the manner of a bayonet fitting. The socket leads to an outlet for filtrate.

It is a problem with such a connection that the seal between the tube sheet and adapter is often the first point of weakness when a filter encounters harsh processing conditions such as repetitive steam sterilizing cycles. When the filter is sterilized, the adapter and the tube sheet both expand by different amounts causing the O-rings to become compressed more than in normal usage. The nature of the elastomers used for such O-rings means that, on cooling, a flat forms on the O-ring.

The tendency to form flats is also encouraged by the presence of differential pressure across the adapter. The presence of flats can lead to leakage past the O-ring and this is plainly undesirable. There can also be problems with compatability between the materials of the O-rings and the fluid to be filtered.

It will be appreciated that if an adapter described above was constructed of a metal of the kind having the same or a similar coefficient of expansion as the tube sheet, then the expansion of the adapter and the tube sheet under steaming conditions should be similar, and this should reduce O-ring damage due to excess compression. If such a metallic adapter were to be used, a method would be required to form a resistant, fluid-tight join between the adapter and the polymeric end cap. The currently available methods of gluing and welding have proven unsuitable for this application.

It will be appreciated that a method for the formation of a resistant, fluid-tight join between a metal adapter and a polymeric end cap may also allow direct connection of the polymeric end cap to the metallic tube sheet. In this case the requirement for O-rings would be avoided altogether.

According to a first aspect of the invention, there is provided a method of connecting a polymeric connector for a filter having a central opening defining a flowpath to a metallic mounting for the filter having an opening which, when the connector and mounting are connected, is in register with the connector opening, the metallic mounting including a connecting portion extending around said mounting opening, comprising heating the connecting portion such that, on the connecting portion contacting the polymeric connector, the polymeric connector is so heated as to permit the connecting portion to be inserted into the polymeric connector, inserting the connecting portion into the polymeric connector to form a fluid-tight join therebetween.

It will be noted that the word mounting as used above and throughout this specification may refer to a tube sheet, or an adapter for connection to a tube sheet, or other suitable examples of metal hardware, to which it may be desired to attach a polymeric filter end-cap.

Attachment of end caps to mountings as described above avoids the use of adhesives. Further, the connecting surfaces of the end cap and mounting are not required to be manufactured to tight tolerances.

According to a second aspect of the invention, there is provided an assembly comprising a polymeric connector for a filter having an opening therethrough, a metallic mounting for a filter having an opening therethrough, the metallic mounting including a connecting portion extending around an end of the metallic mounting opening, said connecting portion having been inserted into the polymeric connector, after heating of the connecting portion, to form a fluid-tight connection between the polymeric connector and the metallic mounting, a continuous flowpath therethrough provided by said openings.

The following is a more detailed description of an embodiment of the invention, by way of example, reference being made to the accompanying drawings in which:-
Figure 1 is a schematic cross-sectional view of a portion of a polymeric end cap of a filter connected to a metallic adapter which in turn is fitted into a tube sheet,
Figure 2 is an enlarged cross sectional view of a flange of a metallic mounting such as the adapter of Figure 1 showing a rib and a recess,
Figure 3 is a schematic cross-sectional view of part of an apparatus for connecting an end cap of a filter to a mounting,
Figure 4 is a schematic view, partly in cross-section, of an assembly for testing a connection between an end cap and a metallic adapter similar to that shown in Figure 1, and
Figures 5a to 5g are schematic cross-sections of alternative configurations of a flange of a metallic adapter of the kind shown in Figures 1 to 4.

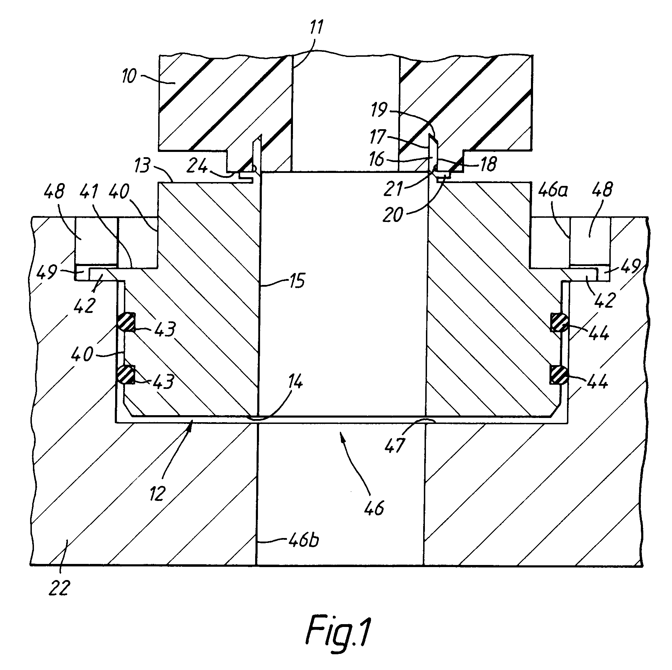

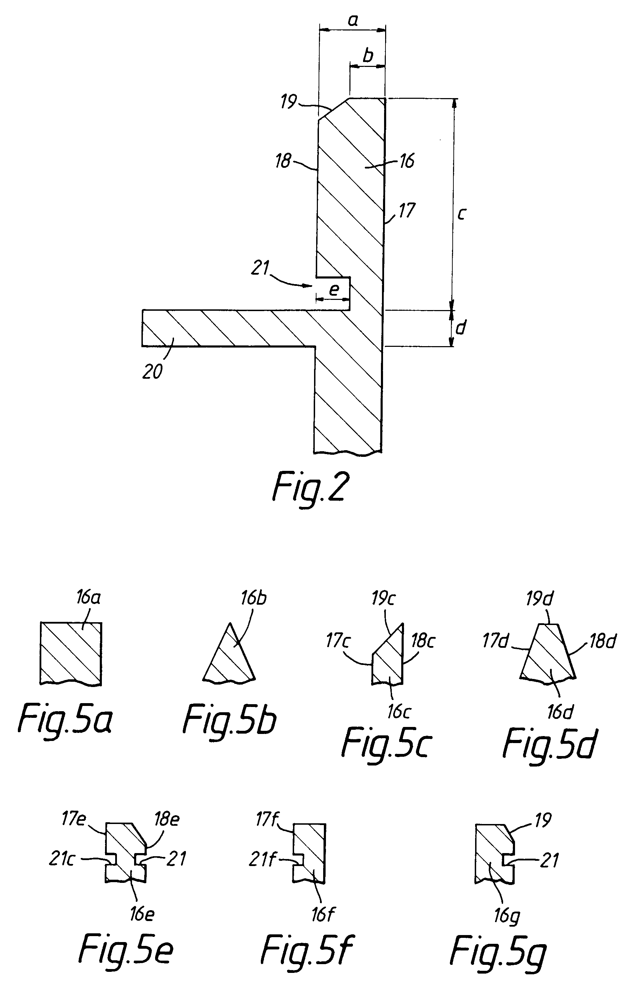

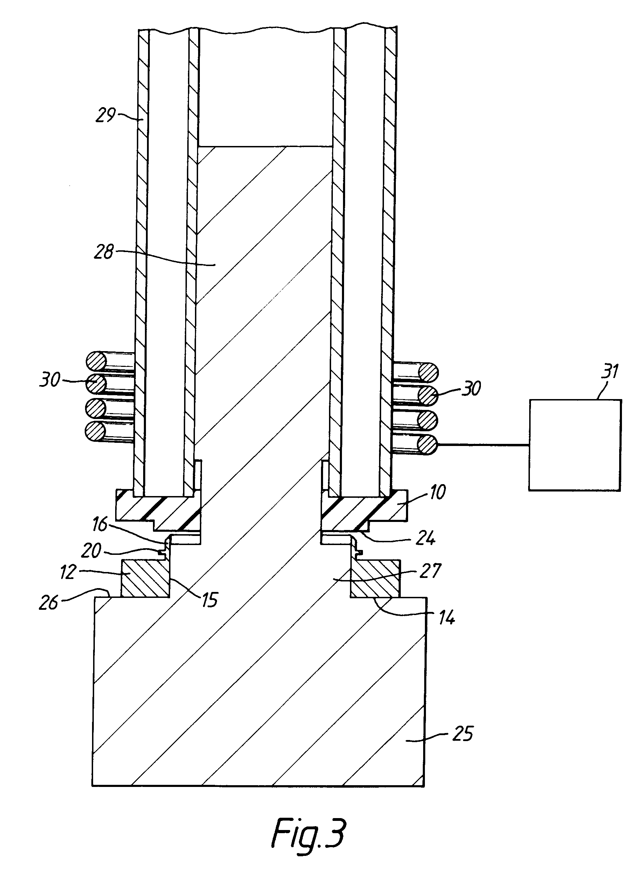

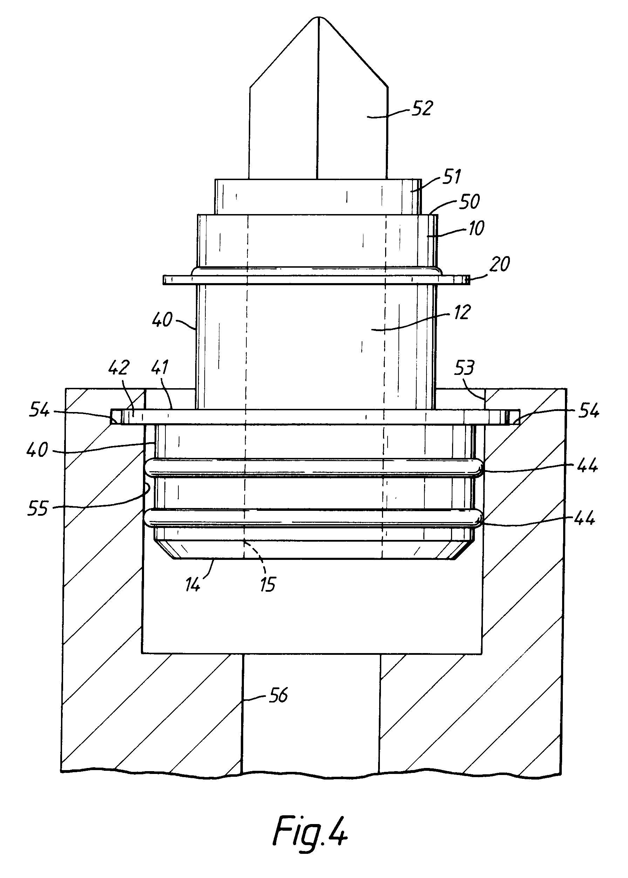

Referring first to Figures 1 and 2, a filter (not shown) which may be formed by a tubular pleated element, is connected to a polymeric end cap 10 by any one of a number of known methods. The end cap 10 includes a central aperture 11 providing an outlet for filtrate from the interior of the filter.

The end cap may be made of polyester, polypropylene, nylon or of any other suitable thermoplastic polymer.

The end cap 10 is connected to a metallic adapter 12 which provides a mounting for the end cap 10. The adapter is generally annular with radially extending upper and lower surfaces 13,14 respectively. The adapter 12 has a central opening 15 in register with the opening 11 in the end cap 10.

An annular flange 16 extends around the upper end of the opening 15 on the upper surface 13 of the adapter 12. The flange 16 has inner and outer annular axially extending surfaces 17,18 respectively. The free end of the flange 16 is provided with an outwardly facing chamfer 19 for a purpose to be described below.

The outer surface 18 of the flange 16 has an annular radially extending rib 20 projecting from the surface 18. As seen in Figure 1, this rib 20 is spaced from the upper surface 13 of the adapter 12.

An annular recess 21 of generally U-shaped cross-section is provided in the outer surface 18 of the flange 16 adjacent the rib 20 and between the rib 20 and the chamfer 19.

The polymeric material of the end cap 10 extends into this recess 21 to form a key that locks the end cap 10 to the adapter 12 to form a continuous flowpath through the end cap 10 and the adapter 12. The flange 16 provides a fluid-tight seal between the parts.

The adapter 12 may be made from the same metal as that used in the construction of the tube sheet 22.

The adapter 12 has an outer surface 40 which is formed with a radially extending step 41 intermediate the upper and lower surfaces 13,14. Two lugs 42 project from diametrically opposite sides of the surface 40 adjacent the outer end of the step 41. The portion of the outer surface 40 extending downwards from the outer end of the step 41 is formed with two axially spaced grooves 43 each carrying a respective O-ring 44.

The adapter 12 is connected to a tube sheet 22 in the following way. The tube sheet 22 is provided with an outlet 46 formed by an upper larger diameter section 46a and a lower smaller diameter section 46b, with the two sections being connected by a radial step 47. The upper end of the upper section 46a is provided with diametrically opposed axially extending slots 48 leading to associated circumferentially extending grooves 49.

The lugs 42 are inserted into respective slots 48 as the adapter 12 is inserted into the upper section 46a of the aperture 46. The dimensions of the adapter 12 and the upper section 46a are such that this brings the O-rings 44 into sealing engagement with the upper section 46a below the slots 48. The adapter 12 is then twisted to lock the lugs 42 in the grooves 49 and so lock the adapter 12 to the tube sheet 22. In this position, the lower surface 14 of the adapter 12 is adjacent the step 47 in the outlet 46.

It will be appreciated that the end cap 10 may be connected directly to a tube sheet 22. In this case the flange 16 and the associated features are formed around the aperture 46 and the remaining parts of the adapter, and the step 47, slots 48 and grooves 49 of the tube sheet omitted.

The end cap 10 is connected to the adapter 12 in the following way.

First, the flange 16 is heated to a temperature which, when the heated flange 16 contacts the end cap 10 is sufficient to heat the end cap 10 to allow the flange 16 to be inserted into the end cap 10. The heated flange 16 is then engaged with a lower surface 24 of the end cap 10 and pushed into the surface 24. The presence of the chamfer 19 assists this insertion.

The plastics material of the end cap 10, as a result of the heating, flows around the flange 16 and into the recess 21 to form the key. Accordingly, after cooling, the end cap 10 and the adapter 12 are securely locked together.

An apparatus for forming such a connection is shown in Figure 3. Parts common to Figures 1 and 2 and to Figure 3 will be given the same reference numerals but will not be described in detail.

The apparatus comprises a base 25 having an upper surface 26 provided with a projection 27 which fits closely within the opening 15 of an adapter shown schematically at 12, with the lower surface 14 of the adapter 12 resting on the upper surface 26 of the base.

A guide rod 28 projects upwardly from the projection 27 and, as shown, is sized to fit inside a tubular filter element 29 carrying an end cap 10 so that the filter element 29 can be slid up and down the guide rod 28.

A work coil 30 of an induction heating system 31 of variable power output is arranged around the guide rod 28 but with a sufficient gap to allow the filter element 29 to pass between the work coil 30 and the guide rod 28.

The adapter 12 is positioned on the projection 27 in contact with the upper surface 26 of the base 25. The filter element 29 is placed over the guide rod 28 and positioned so that the lower surface 24 of the end cap 10 is resting on the end of the flange 16. The induction heating system 31 is then operated to activate the work coil 30 which heats the flange 16. The position of the work coil 30 above the flange 16 is such that the remainder of the adapter 12 is not heated to such a great extent as the flange 16.

When the temperature of the flange 16 is sufficient to allow insertion into the end cap 10, a downward force is applied to the filter element 29 to cause the flange to pass into the end cap 10. This insertion continues until the rib 20 contacts the lower surface 24 to provide a resistance to further insertion. At this point, the material of the end cap 10 flows into the recess 21 to form the key.

The apparatus thus holds the adapter 12 in alignment with the end cap 10 and maintains that alignment during insertion. The adapter 12 is held firmly in position and also has its position fixed relative to the work coil 30.

After cooling, the filter element 29, the end cap 10 and the connected adapter 12 are removed from the guide rod 28.

The adapter 12 can be separated from the end cap 10 by reheating the flange 16 and separating the adapter 12 from the end cap 10. This separation can be achieved using the apparatus shown in Figure 3; the induction heating system 31 being used to activate the work coil 30 to heat the flange 16 and then the filter element 29 and the end cap 10 being gently pulled away from the adapter 12.

The adapter 12 can then be reattached to another end cap 10 in the same way and this can be repeated a number of times.

After separation of the metallic adapter 12 from the polymeric end cap 10 some retention of polymer on the adapter 12 can be detected by differential weighing in some cases. It has been found that, where present, the amount of retained polymer does not interfere with subsequent re-attachment and re-separation. In any event, such retained polymer can be readily burned off or where burning is not appropriate can be removed with a light abrasive. A land can be provided in the bore 15 to prevent polymer spreading down the bore 15 and to make it available for subsequent connections.

The apparatus described above with reference to Figure 3 can also be used to connect an end cap 10 to a flange 16 formed directly on a tube sheet 22. In this case, the aperture 46 in the tube sheet 22 is placed over the projection 27 of the base 25 to position the flange 16 relative to the end cap 10. The remainder of the method is as described above with reference to Figure 3.

It will be appreciated that the temperature to which the metallic flange is raised prior to insertion into a polymeric end cap influences the strength and fluid-tightness of the connection. The temperature which provides the optimum connection will depend largely on the melting point of the polymeric material and also on a variety of other factors including the relative temperatures of the end cap and flange, the specific heat capacities of the polymeric and metallic materials, the mass and configuration of the flange, the heat conducting properties of the polymeric and metallic materials and the fluid properties of the polymer at temperatures above its melting point.

In practice the heating conditions providing the optimum, or a satisfactory, connection can be determined experimentally for each specific application.

An example is described below involving the testing of a series of connections made between metallic adapters as shown in Figure 1 and filter end caps using a variety of heating conditions. In the description that follows parts are described that correspond to parts described above with reference to Figures 1 to 3. The same reference numerals will be used below to identify those parts as are used above and the parts will not be described in detail.

The connection between an adapter 12 and an end cap 10 was made as described above using an induction heating system 31 having a maximum power of 3kW but using various percentages of full power for various times. For the purposes of this example the adapter 12 was constructed from stainless steel and was provided with a flange 16 for which the dimensions marked on Figure 2 as a, b, c, d and e were specifically 1.5, 0.5, 2.25, 0.5 and 0.5mm respectively and which had an internal diameter of 45mm. The end cap was constructed from polyester. The work coil had an internal diameter of 85mm and was constructed from four turns of 3.175mm (1/8 inch) diameter copper tube. The lowest turn of the work coil was 25mm above the knife edge.

Figure 4 shows a set-up suitable for the evaluation of the pressure required to cause failure of a connection between a stainless steel adapter 12 and a polyester end cap 10. For the purpose of this test, the end cap 10 is not attached to a filter, but is sealed on the filter side 50 by means of a plate 51 attached to a bombfin 52. This assembly will be referred to as a dummy filter assembly. The adapter 12 is fitted into a socket 53 which resembles the upper section 46a of the aperture 46 of the tube sheet 22, shown in Figure 1 and incorporates two diametrically opposed axially extending slots (not shown), corresponding to the slots 48 of the tube sheet 22, associated circumferentially extending grooves 54 and an annular sealing surface 55. The socket 53 is provided with a connection 56 to a source of water under pressure. Water is fed into the socket 53 via the opening 56 causing the pressure within the opening 15 of adapter 12 to increase until the connection fails and the end cap 10 is separated from the adapter 12.

The power settings and times and the pressure at which each assembly burst are given in Table 1.

**Table 1**

| **Machine Power (% of 3kW)** | **Time (Seconds)** | **Burst (MPa)** | **Pressure (psi)** |
|---|---|---|---|
| 30 | 28 | 1.00 | 145 |
| 30 | 25 | 1.17 | 170 |
| 30 | 25 | 1.07 | 155 |
| 60 | 13 | 1.10 | 160 |
| 60 | 12 | 1.17 | 170 |
| 60 | 12 | 1.31 | 190 |
| 90 | 9 | 1.45 | 210 |
| 90 | 7 | 1.48 | 215 |
| 90 | 7 | 1.38 | 200 |
| 90 | 7 | 1.17 | 170 |
| 90 | 6.5 | 1.24 | 180 |
| 90 | 6.5 | 1.28 | 185 |
| 90 | 6.5 | 1.38 | 200 |
| 90 | 6 | 1.14 | 165 |
| 90 | 6 | 0.93 | 135 |
| 60 | 11 | 1.21 | 175 |
| 60 | 11 | 1.28 | 185 |

It will be seen that in general the greatest burst strength is given with 90% power at 7 seconds. Increasing the time above 7 seconds at 90% power produces no improvement in burst pressure while reducing the time at that power decreases the burst pressure. Useful burst pressures can also be obtained at 60% power for 12 seconds but again reducing the time does not improve the burst pressure.

As indicated above the adapters to which tubular filters are conventionally attached for mounting in tube sheets are similar in design to the metallic adapter 12 shown in Figures 1 and 4 but constructed of polyester. The dummy filter assembly described above with reference to Figure 4 was attached to such a polyester adapter by the conventional technique of flame welding. The polyester adapter was then mounted in the test socket 53 in a similar manner to the stainless steel adapter 12 described above, and then subjected to increasing pressure. At 0.69 MPa (100 psi) pressure the polyester adapter broke. Hence the connection between the stainless steel adapter and the polyester end cap will withstand more pressure than the conventionally used polyester adapter in this test system.

During normal filtration practice, when utilizing tubular filters attached to a tube sheet by adapters, the fluid to be filtered is presented to the external face of the filter and the filtrate collects in the central opening of the filter and exits via the central openings of the end cap and adapter and finally passes through the opening in the tube sheet. Thus the connection between the end cap 10 and the adapter 12 is, in normal service, subjected to a compressive (inward) pressure rather than the expansive (outward) pressure used in the test described above with reference to Figure 4.

The strengths of the stainless steel adapter/dummy filter assembly and the polyester adapter/dummy filter assembly, as described above, were compared in a compressive pressure test simulating normal service. One of these assemblies was mounted in the test socket 53 shown in Figure 4, formed as part of a polymeric housing provided with an inlet connected to a source of water under pressure (not shown). Water was then admitted into the polymeric housing causing increasing pressure to be applied externally to the adapter/dummy filter assembly. When tested in this way the stainless steel adapter/dummy filter assembly remained intact at pressures up to 7.58 MPa (1,100 psi), the maximum pressure which could be used with the test apparatus. The polyester adapter/dummy filter assembly failed at approximately 3.45 MPa (500 psi), at which pressure the retaining lugs 42 of the polyester adapter broke off and the dummy filter assembly collapsed.

Both the expansive test described above with respect to Figure 4 and the compressive test described above demonstrate that the connection between a stainless steel adapter and a polyester end cap made by the method disclosed above is able to withstand greater pressure than the conventionally used polyester adapters.

In normal service it is desirable to be able to steam sterilize tubular filter assemblies while they are connected either to an adapter 12 for fitting to a tube sheet 22 or directly to the tube sheet 22. To test whether steam treatment causes any deterioration in the strength of the connection between a polymeric end cap 10 and a metallic adapter 12 made by the method disclosed above, a stainless steel adapter connected to a filter module fitted with a polyester end cap was repeatedly subjected to steam treatment at 140°C. The connection between the end cap 10 and the adapter 12 had been made by heating for 20 seconds with a 3kW induction coil set at 80% power using the apparatus described above with reference to Figure 3. The dimensions of the adapter were as described above in respect of the expansive (outward) pressure test.

After each of a different number of steaming cycles, the filter module/adapter assembly was tested by the standard Pall forward flow test which tests gas flow through the filter medium, integrity of the filter assembly itself and integrity of the connection between the filter and adapter. The test involves presenting an external face of a pre-wetted filter with compressed air at a predetermined pressure. The flow of air exiting from the filter/adapter assembly is measured and compared with a range of normal values. The normal values are the values expected if the integrity of the filter element and the associated components do not have any leakage paths which allow gas to pass into the interior of the filter other than through the pores of the filter.

These gas flow values are shown in Table 2 after the assembly has been subjected to nine different numbers of cycles of steam treatment as shown. The values obtained up to 16 cycles are within the acceptable limits and the total number of cycles exceeded the requirement for validation.

**TABLE 2**

| No. of Cycles | Forward Flow (cm3/min) |
|---|---|
| 0 | 1.28 |
| 1 | 1.34 |
| 2 | 1.32 |
| 3 | 1.58 |
| 4 | 2.26 |
| 8 | 1.02 |
| 12 | 2.24 |
| 16 | 1.02 |
| 20 | join separated during steaming |

It will be apparent that the strength of the join between an end cap 10 and an adapter 12 will depend in part on the configuration of the flange 16 above the rib 20. Flange configurations were tested other than that configuration described above with reference to Figure 2. These are illustrated in Figures 5a to 5g.

The flange 16a of Figure 5a has a rectangular configuration. The flange 16b of Figure 5b has a cross-section that is an equilateral triangle. The flange 16c of Figure 5c has parallel inner and outer surfaces 17c,18c with the outer surface 18c projecting axially beyond the inner surface 17c and being connected to the inner surface 17c by an angled end surface 19c. The flange 16d of Figure 5d has converging inner and outer surfaces 17d,18d connected by a surface 19d lying in a plane normal to the axis of the adapter 12. The flange 16e of Figure 5e is as described above with reference to Figure 2 but with the addition of a second recess 21e formed in the inner surface 17e and axially aligned with the recess 21 in the outer surface 18e. The flange 16f of Figure 5f has a rectangular configuration and has a recess 21f formed in the inner surface 17f. The flange 16g of Figure 5g is as described above with reference to Figure 2.

Each of these flanges 16,16a,16b,16c,16d,16e,16f was applied to a respective adapter 12 and the burst strength of the adapter-dummy filter assembly tested as described above with reference to Figure 3. The power setting was 80% for 20 seconds. The results of the tests are set out in Table 3 below.

**TABLE 3**

| Flange Configuration | Burst Pressure | |
|---|---|---|
| (Figure No.) | (MPa) | (psi) |
| | (Mean ± Standard Deviation) | |
| 5a | 1.02±0.02 | 148±3 |
| 5b | 1.08±0.14 | 157±21 |
| 5c | 1.14±0.22 | 165±32 |
| 5d | 1.23±0.17 | 178±24 |
| 5e | 2.03±0.17 | 294±24 |
| 5f | 1.32±0.22 | 192±32 |
| 5g | 1.21±0.24 | 176±35 |

It will be seen that all the configurations provided satisfactory burst strength, but that the flange 16e of Figure 5e produced a significantly higher burst strength than the other flanges. It will be noted that this flange 16e has two recesses 21,21e and it is believed that the two keys formed in these recesses 21,21e provide significant additional strength.

The polymeric end cap/metallic mounting connections described above with reference to the drawings have a number of advantages:-
1. Connection does not require the use of other materials such as adhesives.
2. The method of applying heat to the flange 16 is localized and therefore very efficient.
3. The connecting surface of the end cap 10 and that of the adapter 12 provided with the connecting flange do not have to be manufactured to tight tolerances unlike corresponding parts which are fitted together with adhesives or by welding techniques.
4. The join between the flange 16 and the end cap 10 has a superior steam cycle life integrity than existing methods of attachment.
5. Connection of a filter end cap directly to the tube sheet avoids the use of elastomeric O-rings.
6. The use of a metallic adapter to fit a filter to a tube sheet made of the same metallic material, or one with a similar coefficient of expansion, reduces the formation of flats on O-rings during heating/cooling cycles.
7. The join between the polymeric end cap and metallic mounting involves less polymer in the construction of the whole filter assembly and is thus more cost effective.
8. Connection of a filter end cap directly to the tube sheet reduces the number of components and thus decreases the chance of manufacturing errors.
9. The connection can be unmade and remade using a fresh filter a number of times, the metallic mounting being re-used. This reduces the amount of polymer for disposal compared to the use of polymeric adapters.
10. The metallic adapters are stronger than polymeric equivalents allowing thinner wall sections to be used so allowing the size of the aperture 15 to be increased and so reducing the pressure drop across the filter.
11. Before using flame welding to join a polymer adapter to a polyester end cap, the polyester must be dried for approximately 12 hours before such use. The join between a metallic mounting and a polyester end cap made according to the invention does not require drying in order to maximise the join strength.

It will be appreciated that the connection method described above need not be used between end caps and mountings. It could be used between any polymeric part and any metallic part where the metallic part is heated and inserted into the polymeric part with the polymeric part forming a key in the recess provided in the metallic part. Even in the embodiments described above relating to filters, the parts need not be as described. The flange 16 need not be annular; it could be any suitable shape. The recess 21 need not be annular; it could be any shape and it need not be continuous around the flange 16. A number of recesses could be provided.

The rib 20 is optional.

An inductive heating system need not be used; any suitable heating system may be used as required. The parts need not be connected using the apparatus described above with reference to Figure 3 or tested using the apparatus described above with reference to Figure 4. Any suitable apparatus could be used.

## Claims

1. A method of connecting a polymeric connector for a filter having a central opening defining a flowpath to a metallic mounting for the filter having an opening which, when the connector and mounting are connected, is in register with the connector opening, the metallic mounting including a connecting portion extending around said mounting opening, comprising heating the connecting portion such that, on the connecting portion contacting the polymeric connector, the polymeric connector is so heated as to permit the connecting portion to be inserted into the polymeric connector, inserting the connecting portion into the polymeric connector to form a fluid-tight join therebetween.

2. A method according to claim 1 wherein the connecting portion includes means for contacting the polymeric connector to limit the depth of insertion of the connecting portion into the polymeric connector, the connecting portion being inserted into the polymeric connector until the connector contacts said limiting means.

3. A method according to claim 1 or claim 2 wherein the connecting portion includes at least one recess, the material of the polymeric connector flowing into the at least one recess to form a key, the at least one key resisting separation of the connection portion and the polymeric connector after connection.

4. A method according to any one of claims 1 to 3 wherein the connecting portion is heated by an inductive heating process.

5. A method according to claim 4 wherein the polymeric connector is of polyester and the metallic mounting is of stainless steel, the method comprising heating the connecting portion inductively at a power of 2.7kW for 7 seconds.

6. A method according to any one of claims 1 to 5 and comprising heating the connecting portion after formation of said join, separating the connecting portion and the polymeric connector, heating the connecting portion such that, on the connecting portion contacting a further polymeric connector, the further polymeric connector is so heated as to permit the connecting portion to be inserted into the further polymeric connector, inserting the connecting portion into the further polymeric connector to form a fluid-tight join therebetween.

7. A method according to claim 6 and comprising separating the connecting portion and the further polymeric connector and joining the connecting portion to another further polymeric connector.

8. A method according to claim 7 and comprising repeating said separating and joining steps at least one further time.

9. An assembly comprising a polymeric connector for a filter having an opening therethrough, a metallic mounting for a filter having an opening therethrough, the metallic mounting including a connecting portion extending around an end of the metallic mounting opening, said connecting portion having been inserted into the polymeric connector, after heating of the connecting portion, to form a fluid-tight connection between the polymeric connector and the metallic mounting, a continuous flowpath therethrough provided by said openings.

10. An assembly according to claim 9 wherein the connecting portion has at least one recess with the polymeric connector forming a key in the at least one recess, the at least one key resisting separation of the polymeric connector and the metallic mounting.

11. An assembly according to claim 10 wherein the or each recess extends around the connecting portion.

12. An assembly according to any one of claims 9 to 11 wherein said connecting portion comprises a flange extending in a direction generally parallel to the flowpath.

13. An assembly according to claim 12 wherein said polymeric connector is a generally annular filter end cap which has an end formed by an annular radially extending surface, the flange being generally annular, coaxial with said end cap and extending into said end cap end surface.

14. An assembly according to claim 13 wherein said flange has one or more annular side walls, the side wall or walls respectively including one or more annular recesses into which said key or keys extend and which open in a generally radial direction.

15. An assembly according to claim 14 wherein a first side wall extends in a direction parallel to the axis of the flange and faces radially outwardly of the flange and a second side wall extends in a direction parallel to the first and faces radially inwardly of the flange.

16. An assembly according to any one of claims 9 to 15 wherein the metallic mounting includes means for limiting the depth of insertion of the connecting portion into the polymeric member.

17. An assembly according to claim 16 when dependent on any one of claims 12 to 15 wherein said limiting means are provided on said flange.

18. An assembly according to claim 17 when dependent on any one of claims 13 to 15 wherein the limiting means comprises a rib projecting from said flange and contacting the end cap to limit the depth of insertion of said flange into the end cap.

19. An assembly according to claim 18 wherein said rib is annular and extends in a plane generally normal to the axis of the flange.

20. An assembly according to claim 19 wherein the rib projects radially outwardly of said flange.

21. An assembly according to claim 20 when dependent on claim 14 or claim 15 wherein the rib is located on the flange adjacent a radially outwardly facing recess such that the recess lies towards the free end of the flange in relation to the rib.

22. An assembly according to claim 12 and any claim appendant thereto wherein the flange is provided with a portion of reducing thickness towards the free end of the flange to assist insertion of the flange into the end cap.
